# EUROPEAN PATENT APPLICATION

(11) **EP 3 434 508 A1**
(43) Date of publication of application: **30.01.2019**
(21) Application number: 18185516.4
(22) Date of filing: 25.07.2018
(51) Int. Cl.: B60L 50/15, B60L 50/50, H02J 7/14

(54) **ELECTRIC SYSTEM ARCHITECTURE FOR RANGE EXTENDED ELECTRIC VEHICLES**

(30) Priority: 25.07.2017 US 201715658898
(71) Applicant: Hamilton Sundstrand Corporation, Charlotte, NC 28217-4578 (US)
(72) Inventor: ROZMAN, Gregory I., Myrtle Beach, SC 29577 (US); MOSS, Steven J., Rockford, Illinois 61114 (US)
(74) Representative: Dehns

(57) **Abstract**

An example vehicle electrical power system includes a battery (12) operable to power a DC load of a vehicle over a DC bus (16), a capacitor (18), a multiphase AC machine (26) comprising a plurality of windings (A, B, C), and a power converter. The power converter includes a plurality of power switches (44, 46) and a controller (20). The controller (20) is configured to, in a first mode, charge the battery (12) by operating the power converter as an active rectifier; in a second mode, operate the power converter as a buck converter that decreases a voltage from the DC bus (16), and charge the capacitor (18) from the decreased voltage; and in a third mode, operate the power converter as a boost converter for the capacitor (18) that increases an output voltage of the DC bus (16), and provide the increased output voltage to the DC load. The power converter utilizes the windings when operated as the active rectifier, buck converter, and boost converter.

## Description

### BACKGROUND

The present disclosure relates to electrical power systems, and more particularly to an electrical power system for a range extended electric vehicle.

Conventional electric vehicles (EVs) rely on a battery, such as a lithium-ion battery, as a sole power source. These types of EVs, however, can only be used for a relatively short duration. To extend the vehicle range, range-extended EVs (RE-EVs) which incorporate an internal combustion engine as a secondary power source to charge the lithium-ion battery and/or operate the vehicle have been introduced.

Lithium-ion batteries are suitable for many direct current (DC) loads in EVs, but they have a linear discharge curve and may not handle certain DC loads adequately, such as pulse (dynamic) loads.

### SUMMARY

An example vehicle electrical power system includes a battery operable to power a DC load of a vehicle over a DC bus, a capacitor, a multiphase AC machine comprising a plurality of windings, and a power converter. The power converter includes a plurality of power switches and a controller. The controller is configured to, in a first mode, charge the battery over the DC bus by operating the power converter as an active rectifier; and in a second mode, operate the power converter as a buck converter that decreases a voltage from the DC bus, and charge the capacitor from the decreased voltage. The controller is configured to, in a third mode, operate the power converter as a boost converter for the capacitor that increases an output voltage of the DC bus, and provide the increased output voltage to the DC load. The power converter utilizes the plurality of windings when operated as the active rectifier, buck converter, and boost converter.

A method of operating a vehicle electrical power system is also disclosed.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 is a schematic view of an example vehicle electrical power system.
Figure 2 is an enlarged view of a multifunctional converter circuit of the example vehicle electrical power system of Figure 1.
Figure 3 is a schematic view of another example vehicle electrical power system.
Figure 4 is flowchart of an example method of operating a vehicle electrical power system.

### DETAILED DESCRIPTION

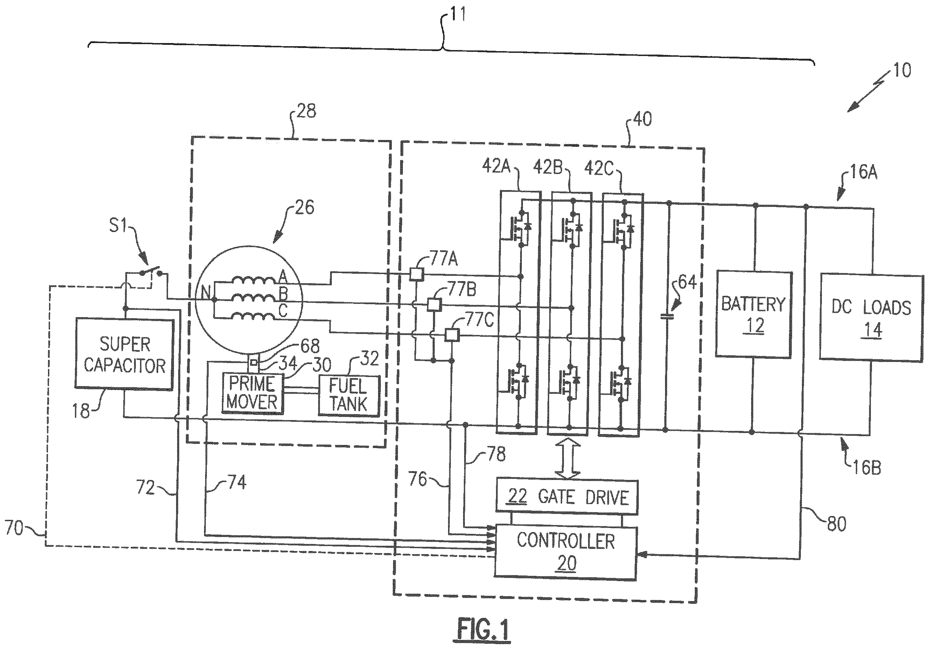

Figure 1 schematically illustrates an example electrical power system 10 for a vehicle, such as an electric military ground or underwater vehicle, that includes a power generating section 11 and a plurality of DC loads 14. The power generating section 11 includes a battery 12 that is operable to power the DC loads 14 over a DC bus that includes a positive rail 16A and a negative rail 16B, collectively referred to herein as DC bus 16. The battery 12 is a lithium-ion battery in some non-limiting examples.

The DC loads 14 include at least one base load and at least one pulse (dynamic) load. The at least one base load tends to have a more constant power usage, and may include items such as an export inverter (e.g., for plugging in an AC appliance in a vehicle), or a vehicle HVAC system, for example. The at least one pulse load has a more variable power usage, and may include items such as a traction drive motor of an electric vehicle, a radar, or a laser or microwave-based weapon (e.g., a directed-energy weapon or "DEW"). A traction drive motor, for example, may perform rapid acceleration during which additional voltage is needed on the DC bus 16, and may perform rapid deceleration, potentially in connection with regenerative braking, where excess voltage may be provided on the DC bus 16.

A supercapacitor 18 is provided that can charge and discharge more rapidly than the battery 12 during such conditions. The supercapacitor 18 is operable to charge during an overvoltage condition on the DC bus 16, and discharge during an undervoltage condition on the DC bus 16. As used herein, a "supercapacitor" refers to a high-capacity capacitor with capacitance values much higher than other capacitors, and that typically store 10 to 100 times more energy per unit volume or mass than electrolytic capacitors, and can accept and deliver charge much faster than batteries. In one example, the supercapacitor 18 has a specific density of 3-10 Wh/kg and an energy density of 14-17 Wh/L.

Lithium-ion batteries provide long term energy and have a flat discharge curve, whereas supercapacitors 18 are most effective when a quick charge and/or discharge is needed to support pulse loads. Combining the battery 12 and the supercapacitor 18 satisfies long-term energy requirements of an electric vehicle and also facilitates quick charging/discharging, resulting in reduced battery stress and improved reliability.

The supercapacitor 18 is selectively connected to the positive rail 16A of the DC bus 16 by a switch S1. In particular, when the switch S1 is ON, supercapacitor 18 is connected the positive portion 16A of the DC bus 16 through a neutral N of a multiphase alternating current (AC) machine 26. When the switch S1 is OFF, the supercapacitor 18 is disconnected from the neutral N of AC machine. The switch S1 is operated by a controller 20, through its associated gate drive 22 and a control line 70. In one example the switch S1 is a solid state circuit breaker (SSCB), but it is understood that other switches could be used if desired.

Supercapacitors 18 have a linear discharge curve and require a DC-DC converter to help to recover energy in a low voltage band. A multifunctional converter circuit 40 utilizes stator windings A, B, C of the AC machine 26 to act as a DC-DC converter, and to provide other features as well.

In one example, the AC machine 26 is a brushless electric machine, such as a permanent magnet synchronous machine (PMSM), and the plurality of windings A, B, C are arranged in a wye formation. A PMSM uses rotating permanent magnets to provide an electrical field that induces a current in the plurality of stator windings A, B, C. Of course, other AC machines could be used, such ones that can operate as an axial flux machine, a wound field synchronous machine, or an induction machine.

During typical vehicle operation, the DC loads 14 operate primarily or exclusively from the battery 12. When a charge level of the battery 12 becomes depleted and falls below a charging threshold, the AC machine 26 operates as part of a range extender 28 to charge the battery 12 and extend the range of a vehicle incorporating the electrical power system 10.

The range extender 28 includes a prime mover engine 30 and its associated fuel tank 32. The prime mover engine 30 can be a diesel or gas turbine engine, for example. The prime mover engine 30 drives operation of the AC machine 26 through a rotor 34 that induces an electrical current in the plurality of windings A, B, and C and operates the AC machine 26 as a generator. By providing current to the battery 12 when its charge is depleted, the range of an electric vehicle incorporating the electrical power system 10 can be extended.

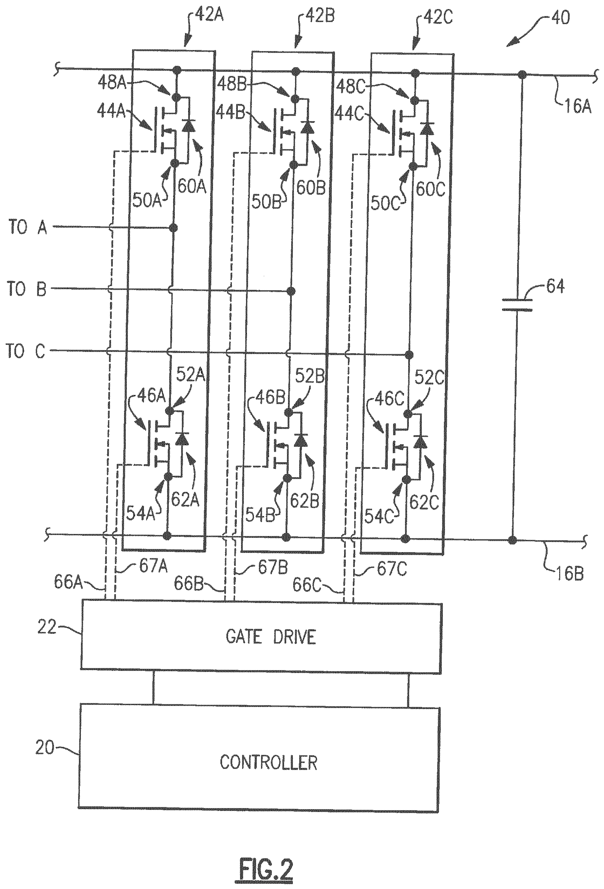

The multifunctional converter circuit 40 has a plurality of switching legs, 42A-C, which are illustrated in more detail in Figure 2. The multifunctional converter circuit 40 described below is a 2-level power converter that is well-known for use as an inverter. However, other topologies, such as multilevel power converter can also be utilized instead. Each switching leg 42 includes a pair of power switches 44 and 46, and controls connection of a respective one of the windings A, B, C of the AC machine 26 to the DC bus 16. The first power switch 44 has a first node 48 connected to the positive rail 16A of the DC bus 16 and also has a second node 50. The second power switch 46 has a first node 52 connected to the second node 50 of the first power switch, and also has a second node 54 connected to the negative rail 16B of the DC bus 16.

An output of each winding A, B, C is connected to the nodes 50, 52 of its respective switching leg 42. Each power switch 44 is connected in parallel to an associated freewheeling diode 60, and each power switch 46 is also connected in parallel to an associated freewheeling diode 62. The freewheeling diodes 60, 62 form a current path when their respective switches 44, 46 are turned OFF. The controller 20 operates gate drive 22 to control the switches 46, 48 over control lines 66A-C and 67A-C. Although the power switches 44, 46 are shown as being metal-oxide semiconductor field-effect transistors (MOSFETs), it is understood that other types of switches could be used, such as insulated-gate bipolar transistors (IGBTs).

The multifunctional converter circuit 40 includes a DC link capacitor 64 connected across the DC bus 16. In some examples, the DC link capacitor 64 is not a supercapacitor.

The power generating section 11 includes four operating modes. In a first "starting mode" mode, the controller 20 starts the prime mover engine 30 from the battery 12. In a second "active rectification" mode, the controller 20 operates the multifunctional converter circuit 40 as an active rectifier that charges the battery 12 while the prime mover engine 30 operates the AC machine 26 in a generator mode. In a third "buck converter" mode, the controller 20 operates the multifunctional converter circuit 40 as a buck converter that decreases a voltage on the DC bus to charge the supercapacitor 18 (e.g., when a traction motor pulse load is rapidly decelerating and performing regenerative braking). In a fourth "boost converter" mode, controller 20 operates the multifunctional converter circuit 40 as a boost converter for the supercapacitor 18 to increase a DC bus voltage (e.g., during rapid acceleration of a traction motor pulse load). The multifunctional converter circuit 40 utilizes the plurality of windings A, B, C of the multiphase AC machine 26 when operated as the active rectifier, buck converter, and boost converter.

The power generating section 11 enters the first mode when a charge of battery 12 is depleted beneath a charge level threshold, and the controller 20 needs to start the prime mover engine 30 from the battery 12. In the first mode, the controller 20 operates the plurality of switching legs 42A-C of the multifunctional converter circuit 40 as a motor drive pulse-width modulated inverter that converts DC from the battery 12, as received over the positive rail 16A of the DC bus, to AC in the plurality of windings A, B, C. This operates the AC machine 26 in a motoring mode, to rotate rotor 34 and provide electric start of the prime mover engine 30. In one example, the controller 20 uses a field oriented motor control using a known sensorless technique. The controller 20 may optionally use a motor rotor position sensor 68 to perform the engine start in the first mode. The rotor position sensor 68 is operable to detect a position of the rotor 34 of the prime mover engine 30. During engine start, the battery 12 is directly connected to the DC bus 16. In one example, switch S1 is open/OFF during the first mode, which disconnects the neutral N of the AC machine 26 from the supercapacitor 18.

Once the prime mover engine 30 is started and reaches a threshold speed, the power generating section 11 enters the second "active rectification" mode in which the multifunctional converter circuit 40 provides DC power to DC bus 16 to recharge the battery 12. In this mode, the controller 20 performs pulse width modulation on the switching legs 42 to operate the multifunctional converter circuit 40 as a pulse width modulated active rectifier.

During the second mode, the controller 20 utilizes a field oriented control using a known sensorless technique, optionally using rotor position sensor 68. Also, during the second mode, switch S1 is open/OFF, which disconnects the neutral N of the AC machine 26 from the supercapacitor 18.

During the second mode the controller 20 operates the multifunctional converter circuit 40 to utilize the windings A, B, C and function as a boost converter. The controller 20 uses an interleaved technique by parallel connection of three channels of boost converters, with each "channel" corresponding to a current phase on a respective one of the windings A, B, C. The controller 20 performs phase shifting of the pulse width modulation frequencies for each phase by 120° between channels. The interleaved technique significantly reduces input and output current ripple on the DC bus 16 and supercapacitor 18.

In the third "buck converter" mode, the controller 20 operates the switching legs 42 of the multifunctional converter circuit 40 to utilize the plurality of windings A, B, C and function as a buck converter that decreases a voltage from the DC bus 16, and charges the supercapacitor 18 from that decreased voltage. The controller 20 enters the third mode based on the detected voltage on the positive rail 16A of the DC bus being above a first voltage threshold, indicating that, for example, regenerative braking may be occurring to provide an overvoltage condition on the DC bus, potentially beyond what can be absorbed by the battery 12.

In the third mode, the controller 20 controls switch S1 to enter or maintain a closed/ON state to enable its charging. Also, in the third mode, switches 46A-C are turned off and the controller 20 performs pulse width modulation on the upper switches 44A-C, using the multiphase interleaving technique. The interleaving technique is used by phase shifting a pulse width modulation frequency applied to the plurality of windings A, B, C by 120°. Here too, such interleaving significantly reduces input and output current ripple. The prime mover engine 30 is not operating during the third mode.

In the fourth "boost converter" mode, the controller 20 controls switch S1 to enter or maintain a closed/ON state, supercapacitor 18 discharges into the plurality of windings A, B, C, and the controller 20 operates the plurality of switching legs 42 as a boost converter that increases the DC bus output voltage. During the fourth mode, switches 44A-C are turned off, and the controller 20 performs pulse width modulation of the switches 46A-C, also using the interleaving technique described above. The controller 20 enters the fourth mode based on a voltage on the DC bus 16 falling below a second threshold voltage that is lower than the first threshold voltage, and which may occur during rapid acceleration of the pulse load (e.g., rapid acceleration of one or more traction motors). The prime mover engine 30 is not operating during the fourth mode.

The electrical power system includes a plurality of lines 70-80 used by the controller 20 for controlling and/or sensing in the electrical power system 10. Control line 70 is used for controlling an operational state of switch S1. Lines 72 and 78 are used to measure a voltage of the battery 12. Sensing line 74 is used to detect a rotational position of rotor 34 of the prime mover engine 30 from sensor 68. Current sensing line 76 is used to detect and/or measure electrical current of the windings A, B, C from current sensors 77A, 77B, 77C. Although a single current sensing line 76 is schematically shown, it is understood that each winding A, B, C, may have its own current sensing line 76. Lines 78 and 80 are used to measure a voltage of the DC bus.

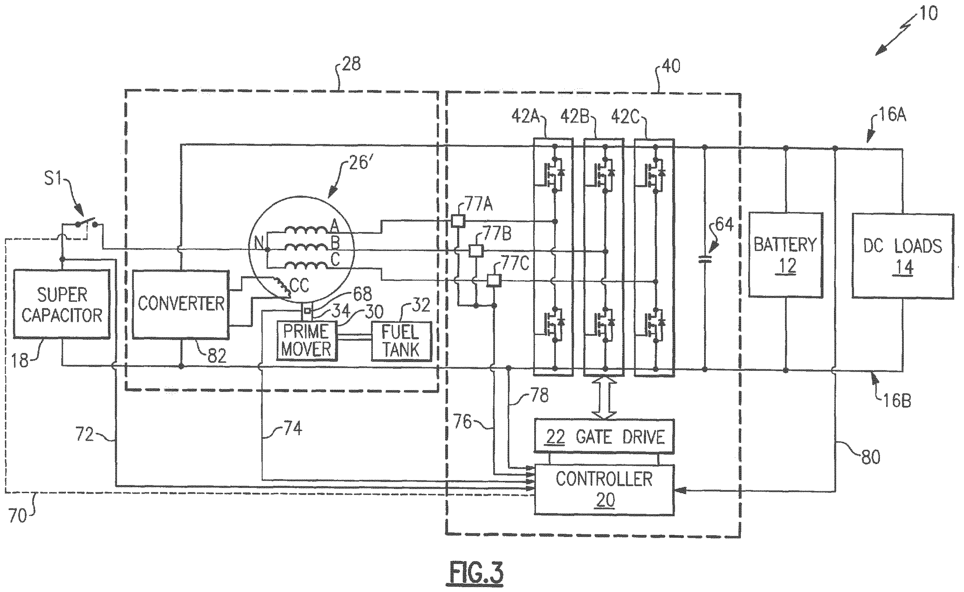

Figure 3 is a schematic view of another example vehicle electrical power 100 in which the AC machine 26' (e.g., a PMSM) includes an additional control coil CC that can be used to control a voltage in the AC machine 26' through a flux regulation feature. This embodiment enables controlled charge of the battery 12 when the prime mover engine 30 engine runs at a high speed during the second mode. The current in the control coil CC enables control of a voltage in the stator windings A, B, C in response to the state of charge of the battery 12. A greater current in the control coil CC produces a greater voltage in the windings A, B, C, whereas a lower current in the control coil CC produces a lower voltage in the windings A, B, C. This can be used to provide an additional degree of control over a desired charging profile for the battery 12, and to reduce an overvoltage condition on the DC bus 16. The current in the control coil CC is controlled by a converter 82 that is connected to the DC bus 16 and is controlled by controller 20 over a control line (not shown).

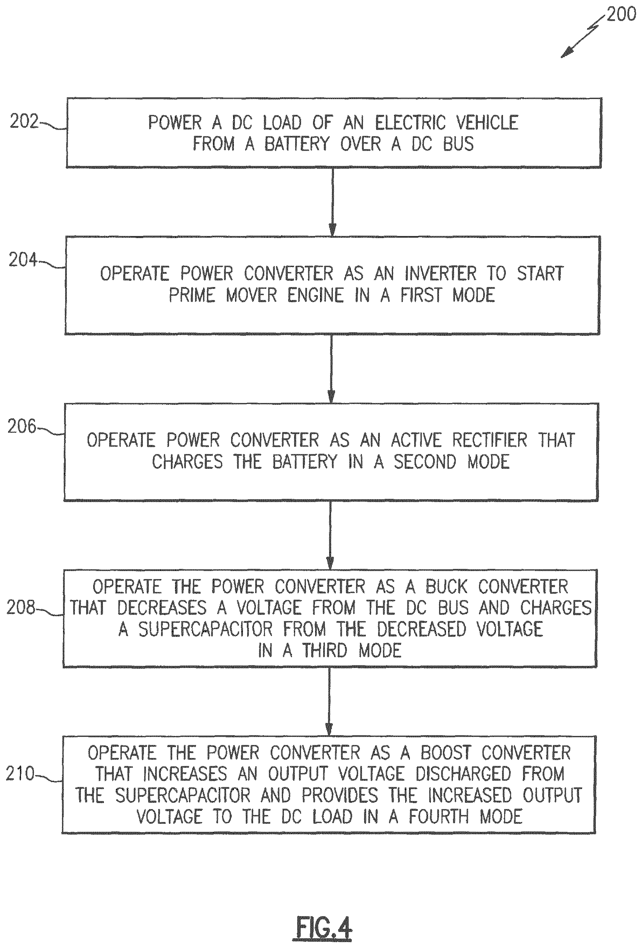

Figure 4 illustrates an example method 200 of operating the electrical power system 10. A DC load of an electric vehicle is powered from battery 12 over DC bus 16 (block 202). A power converter (e.g., that includes multifunctional converter circuit 40 and controller 20) is operated as an inverter to start prime mover engine 30 in a first mode (block 204). The power converter is operated as an active rectifier that charges the battery 12 in a second mode (the active rectification mode discussed above) (block 206). The power converter is operated as a buck converter that decreases the voltage from the DC bus 16 and charges the supercapacitor 18 from the decreased voltage in a third mode (the "buck converter" mode discussed above) (block 208). The power converter is operated as a boost converter that increases an output voltage discharged from the supercapacitor 18, and that increased DC bus output voltage is provided to the DC load in a fourth mode (the "boost converter" mode discussed above) (block 210). The power converter utilizes the plurality of windings A, B, C when operated as the active rectifier, buck converter, and boost converter.

The electrical power system 10 uses electrostatic, electrochemical, and chemical types of energy. The supercapacitor 18 is an electrostatic device, and in one example has a specific density of 3-10 Wh/kg and an energy density of 14-17 Wh/L. The battery 12 is an electrochemical device, and in one example has a specific density of 100-243 Wh/kg and an energy density of 250-731 Wh/L. The prime mover engine 30 uses the chemical energy of its fuel, and in one example has a specific density of approximately 12,880 Wh/kg and an energy density of approximately 9,500 Wh/L.

The electrical power system 10, by combining the electrostatic characteristics of supercapacitor 18 and the electrochemical characteristics of battery 12, provides improved charge and discharge characteristics compared to prior art systems.

The electrical power system 10 eliminates an external inductor typically used in prior art systems by operating the multifunctional converter circuit 40 to utilize the AC machine's stator windings A, B, C and function as boost and buck converters, which can provide additional benefits such as size/weight reduction, parts count reduction, and cost savings, and can also reduce electromagnetic interference (EMI). The elimination can also increase reliability and simplify thermal management, because eliminating the additional DC-DC boost converter can in some examples also facilitate elimination of a dedicated thermal management system of the eliminated boost converter.

Although a three phase system has been described above that includes three windings A, B, C and three switching legs 42A-B, it is understood that this is only an example and that other quantities of phases could be used if desired (e.g., more than three or less than three).

Also, although example embodiments have been disclosed, a worker of ordinary skill in this art would recognize that certain modifications would come within the scope of this disclosure. For that reason, the following claims should be studied to determine the scope and content of this disclosure.

## Claims

1. A vehicle electrical power system (10) comprising:
a battery (12) operable to power a direct current (DC) load of a vehicle over a DC bus;
a capacitor (18);
a multiphase alternating current (AC) machine (26) comprising a plurality of windings (A, B, C); and
a power converter comprising a plurality of power switches (44, 46) and a controller (20), wherein the controller (20) is configured to:
in a first mode, charge the battery over the DC bus (16) by operating the power converter as an active rectifier;
in a second mode, operate the power converter as a buck converter that decreases a voltage from the DC bus, and charge the capacitor from the decreased voltage; and
in a third mode, operate the power converter as a boost converter for the capacitor that increases an output voltage of the DC bus, and provide the increased output voltage to the DC load;
wherein the power converter utilizes the plurality of windings when operated as the active rectifier, buck converter, and boost converter.

2. The vehicle electrical power system of claim 1, wherein the capacitor (18) is a supercapacitor.

3. The vehicle electrical power system of claim 1 or 2, wherein the power switches (44, 46) are arranged in a plurality of switching legs (42), each switching leg (42) comprising a pair of power switches (44, 46) and controlling connection of a respective one of the plurality of windings to the DC bus (16).

4. The vehicle electrical power system of claim 3, wherein the controller (20) is configured to:
perform pulse width modulation on a first group of the power switches (44, 46) while a different, second group of the power switches are turned off during the second mode; and
perform pulse width modulation on the second group of power switches (44, 46) while the first group of power switches are turned off during the third mode, or wherein the controller (20) is configured to operate the power converter as a pulse width modulated active rectifier during the first mode.

5. The vehicle electrical power system of claim 3:
wherein the DC bus (16) comprises a positive rail (16A) and a negative rail (16B); and
wherein each pair of power switches (46, 48) comprises:
a first power switch having a first node (48) connected to the positive rail (16A) of the DC bus (16), and a second node (50); and
a second power switch (46) having a first node (52) connected to the second node (50) of the first switch (44), and second node (54) connected to the negative rail (16B) of the DC bus(16);
wherein an output of each winding (A, B, C) is connected to the second node (50) of the first power switch (44) and the first node (52) of the second power switch (46) of its respective switching leg.

6. The vehicle electrical power system of claim 3, comprising:
a prime mover engine (30) operable to drive the AC machine (26) to produce AC power during the first mode while the prime mover engine (30) is running;
wherein the controller (20) is configured to start the prime mover engine (30) in a fourth mode by operating the power converter as a pulse-width modulated inverter that supplies variable voltage variable frequency power to the plurality of windings of the AC machine (26), which are stator windings (A, B, C).

7. The vehicle electrical power system of any preceding claim, wherein the controller (20) is configured to enter the first mode based on a charge level of the battery falling below a charge level threshold, or
wherein the controller (20) is configured to enter the second mode based on a voltage on the DC bus exceeding a predefined voltage threshold, or
wherein the controller (20) is configured to enter the third mode based on a voltage on the DC bus a falling below a predefined voltage threshold.

8. The vehicle electrical power system of any preceding claim, comprising a control switch that selectively controls a connection between the capacitor and a neutral node of the plurality of windings, wherein the controller is configured to:
disconnect the capacitor from the AC machine (26) neutral in the first mode by turning off the control switch, and
connect the capacitor to the AC machine (26) neutral in the second and third modes by turning on the control switch, or
wherein the multiphase AC machine (26) is a flux-regulated permanent magnet machine that comprises an additional control winding operable to control an output voltage of the flux-regulated permanent magnet machine in the first mode.

9. A method of operating a vehicle electrical power system comprising:
powering a direct current (DC) load of an electric vehicle from a battery (12) over a DC bus (16);
operating a power converter as an active rectifier that charges the battery (12) in a first mode;
operating the power converter as a buck converter that decreases a voltage from the DC bus (16) and charges a capacitor (18) from the decreased voltage in a second mode; and
operating the power converter as a boost converter for the capacitor (18) that increases an output voltage of the DC bus (16) and provides the increased output voltage to the DC load in a third mode;
wherein the power converter comprises a plurality of power switches (44, 46), and utilizes a plurality of windings (A, B, C) of a multiphase alternating current (AC) machine (26) when operated as the active rectifier, buck converter, and boost converter.

10. The method of claim 9, wherein the plurality of power switches are arranged in a plurality of switching legs, each switching leg comprising a pair of power switches (44, 46) that control connection of a respective one of the plurality of windings (A, B, C) to the DC bus (16), the method comprising:
performing pulse width modulation on a first group of the power switches (44, 46) while a different, second group of the power switches are turned off during the second mode; and
performing pulse width modulation on the second group of power switches (44, 46) while the first group of power switches are turned off during the third mode.

11. The method of claim 10, wherein the capacitor is a supercapacitor, and/or comprising:
operating a prime mover engine (30) that drives the AC machine (26) to produce AC power in the first mode; and
operating the power converter as a pulse-width modulated inverter that converts DC power from the DC bus to variable voltage variable frequency power supplied to the plurality of windings of the AC machine (26), which are stator windings (A, B, C), to start the prime mover engine in a fourth mode.

12. The method of claim 9, 10 or 11, comprising:
entering the first mode based on a charge level of the battery (12) falling below a charge level threshold;
entering the second mode based on a voltage on the DC bus (16) exceeding a first predefined voltage threshold; and
entering the third mode based on the voltage on the DC bus (16) a falling below a second predefined voltage threshold that is lower than the first predefined voltage.

13. The method of any of claims 9 to 12, the vehicle electrical power system comprising a control switch that selectively controls a connection between the capacitor and a neutral of the multiphase AC machine, the method comprising:
disconnecting the capacitor (18) from the AC machine (26) neutral in the first mode by turning off the control switch; and
connecting the capacitor to the AC machine (26) neutral in the second and third modes by turning on the control switch.

14. The method of any of claims 9 to 13:
wherein operating the power converter as a buck converter comprises operating the power converter as a three-phase interleaved buck converter; and
wherein operating the power converter as a boost converter comprises operating the power converter as a three-phase interleaved boost converter.

15. The method of any of claims 9 to 14, wherein the multiphase AC machine (26) is a flux-regulated permanent magnet machine, the method comprising controlling an output voltage of the flux-regulated permanent magnet machine in the first mode by adjusting a current in an additional control coil in the multiphase AC machine (26).
